# EUROPÄISCHE PATENTSCHRIFT

(11) **EP 4 200 928 B1**
(45) Veröffentlichungstag und Bekanntmachung des Hinweises auf die Patenterteilung: **02.09.2026**
(21) Anmeldenummer: 21762355.2
(22) Anmeldetag: 30.07.2021
(51) Int. Cl.: H01M 8/0213, H01M 8/0221, H01M 8/0226

(54) **BIPOLARPLATTE UND VERFAHREN ZUR HERSTELLUNG**
FLOW FIELD PLATE AND METHOD FOR PRODUCING SAME
PLAQUE DE CHAMP D'ÉCOULEMENT ET SON PROCÉDÉ DE PRODUCTION

(30) Priorität: 24.08.2020 DE 102020005165
(43) Veröffentlichungstag der Anmeldung: 28.06.2023
(73) Patentinhaber: cellcentric GmbH & Co. KG, 73230 Kirchheim unter Teck (DE)
(72) Erfinder: REHERMANN, Hubertus, 73779 Deizisau (DE); KINLECHNER, Linda, 70327 Stuttgart (DE); SCHEFFLER, Thomas, 70565 Stuttgart (DE); HAUSMANN, Philipp, 73230 Kirchheim unter Teck (DE); PEGEL, Sven, 73230 Kirchheim unter Teck (DE)
(74) Vertreter: Platzöder Patentanwaltsgesellschaft mbH
(86) Internationale Anmeldenummer: PCT/EP2021/071410
(87) Internationale Veröffentlichungsnummer: WO 2022/043001

(56) Entgegenhaltungen:
- EP-A1- 1 602 674
- EP-A2- 1 213 272

## Beschreibung

Die Erfindung betrifft eine Bipolarplatte für eine Brennstoffzelle. Außerdem betrifft die Erfindung ein Verfahren zum Herstellen einer Bipolarplatte für eine Brennstoffzelle.

Bipolarplatten für Brennstoffzellen sind soweit aus dem allgemeinen Stand der Technik bekannt. Solche Bipolarplatten werden aus unterschiedlichen Materialien hergestellt, welche allesamt elektrisch leitend ausgebildet sein müssen. Häufig werden die Bipolarplatten deshalb aus Metall gefertigt. Sie begrenzen in einem sogenannten Brennstoffzellenstack oder Brennstoffzellenstapel die jeweiligen Einzelzellen und sorgen für die Zuleitung und Ableitung von Edukten und Produkten zu den Elektroden und Membranen. Häufig sind sie aus zwei mit ihren Rückseiten gegeneinander gepressten Einzelplatten ausgebildet, zwischen welchen außerdem ein Kühlmedium strömen kann. Auf der einen Seite dieser Bipolarplatte liegt dann die Anode der Einzelzelle, auf der anderen Seite die Kathode der benachbarten Einzelzelle, welche dann ihrerseits über eine sogenannte MEA (Membran Elektroden Anordnung) von der jeweils nächsten Bipolarplatte getrennt ist und somit zusammen mit den einander zugewandten Oberflächen von zwei benachbarten Bipolarplatten die eigentliche Einzelzelle ausbildet.

Neben metallischen Bipolarplatten sind auch Bipolarplatte aus Kunststoff oder aus elektrisch leitenden Keramiken aus dem Stand der Technik bekannt. Bipolarplatten aus Kunststoffen werden häufig als phenolharzgebundene Systeme hergestellt, welche jedoch eine relativ geringe Festigkeit aufweisen. Des Weiteren sind epoxidharzgebundene Systeme bekannt. Beide erfordern relativ lange Prozesszykluszeiten und haben einen hohen energetischen Aufwand, da es sich um einen Heiß-Temperatur-Prozess handelt, der 150 bis 180° C abläuft. Als elektrisch leitfähiger Füllstoff wird dabei meist Graphit und/oder Ruß in feinpulvriger oder feinflockiger Form verwendet, wobei fein in diesem Zusammenhang bedeutet, dass die mittlere Größe der Partikel oder Flocken im Bereich von Mikro- oder Nanometern liegt.

Der gesamte Prozess ist relativ aufwändig. Er kann beispielsweise so gestaltet sein, dass zuerst ein quaderförmiger Rohling hergestellt und anschließend verpresst wird, um die benötigten Strukturen wie Strömungskanäle, Durchbrüche und dergleichen in der Bipolarplatte zu schaffen. Häufig muss anschließend ein Temperprozess nachfolgen, um die erforderliche dauerhafte geometrische Form der Platten ohne Verzug oder dergleichen sicherzustellen. All dies ist relativ aufwändig und energieintensiv. Die erforderlichen Presskräfte sind bei derartigen Prozessen relativ hoch, sodass auch die Abnutzung der Werkzeuge erheblich ist.

Aus der US 2007/0111078 A1 sind außerdem expandierte Graphite zur Herstellung von Bipolarplatten bekannt. Problematisch ist dabei die nicht dauerstabile Formtreue sowie die außerordentlich geringe Festigkeit der Bipolarplatten. Diese geringe Festigkeit erfordert eine entsprechende Konstruktion der Bipolarplatten mit relativ großer Wandstärke, um zumindest die erforderlichen Mindestfestigkeiten zu erreichen. Solch große Wandstärken machen den Aufbau der Bipolarplatten jedoch relativ dick, was hinsichtlich der Leistungsdichte in einem Brennstoffzellenstapel ein Nachteil ist.

Aus der EP 1 213 272 A2 ist es bekannt, Körper aus expandiertem Graphit mit niedrigviskosen, lösungsmittelfreien, lagerstabilen, polymerisierenden Harzen aus der Gruppe der Isocyante und deren Reaktionspartner und/oder Epoxidharze bis zu Harzgehalten von 50 Gew.-% zu imprägnieren, wobei, um das zu ermöglichen, ein Vorprodukt aus expandiertem Graphit mit offenem Porensystem, mit einem besonders bevorzugten Bereich von Rohdichten von 0,5 bis 1,3 g/cm³ und mit einem Aschewert von höchstens 4 Gew.-% verwendet wird, wobei solche Körper anteilig auch Zuschlagstoffe enthalten können, und wobei die imprägnierten, geformten und rasch härtbaren Graphitkörper als Dichtungselemente, als Komponenten in Brennstoffzellen oder als Wärmeleitelemente eingesetzt werden.

Die EP 1 602 674 A1 offenbart eine leitfähige Harzzusammensetzung, die einen leitfähigen Füllstoff, ein Urethan-modifiziertes Epoxy(meth)acrylat, erhalten durch Umsetzung eines Epoxy(meth)acrylats, welches durch Additionsreaktion eines Epoxyharzes mit einer aromatischen cyclischen Struktureinheit und/oder einer aliphatischen cyclischen Struktureinheit und einer (Meth)Acrylsäure erhalten worden ist, mit einem Polyisocyanat, ein (Meth)Acrylat mit einem zahlenmittleren Molekulargewicht von 500 bis 10.000, das 20 bis 80 Gew.-% einer aromatischen cyclischen Struktureinheit und/oder einer aliphatischen cyclischen Struktureinheit enthält und kein aktives Wasserstoffatom aufweist, und das andere ethylenisch ungesättigte Monomer, das mit dem Urethan-modifizierten Epoxy(meth)acrylat und dem (Meth)Acrylat copolymerisierbar ist, umfasst.

Die Aufgabe der hier vorliegenden Erfindung ist es, eine verbesserte, stabilere und kostenoptimierte Bipolarplatte sowie ein Verfahren zur ihrer Herstellung anzugeben.

Erfindungsgemäß wird diese Aufgabe durch eine Bipolarplatte mit den Merkmalen im Anspruch 1 gelöst. Ein Herstellungsverfahren für eine Bipolarplatte, welches die Aufgabe löst, ist im Anspruch 4 angegeben. Vorteilhafte Ausgestaltungen und Weiterbildungen sowohl der Bipolarplatte als auch des Verfahrens zum Herstellen einer Bipolarplatte ergeben sich aus den hiervon jeweils abhängigen Unteransprüchen.

Bei der erfindungsgemäßen Bipolarplatte ist es so, dass diese vergleichbar wie Bipolarplatte aus dem Stand der Technik auf einem Kunstharzsystem mit Füllstoff basiert. Im Gegensatz zu den mit Nachteilen behafteten Epoxid- und Phenolharzsystemen, die eingangs erwähnt worden sind, setzt die erfindungsgemäße Bipolarplatte auf ein Polyurethanharz, welches zahlreiche Vorteile gegenüber den bisherigen phenolharz- oder epoxidharzgebundenen Systemen ermöglicht. Ein ganz entscheidender Vorteil einer solchen Bipolarplatte, welche auf einem polyurethanbasierten Harz beruht, sind ihre besseren mechanischen Eigenschaften, welche eine relativ hohe Festigkeit bei geringerer Sprödigkeit ermöglichen. Die Bipolarplatten sind daher deutlich robuster in der Montage und dem Betrieb, was den Aufbau außerordentlich effizient und vorteilhaft in der Herstellung des Brennstoffzellenstapels und in dessen Handhabung macht.

Polyurethanharze haben dabei den Vorteil, dass sie sich bei sogenannten Warmtemperaturen von 50 bis 60° C aushärten lassen, während bei Epoxid- oder Phenolharzsystemen Heißtemperaturen von 150 bis 180° C erforderlich sind. Diese Temperatureinsparung von ca. 100° C sowie die Möglichkeit, auf einen Nachtempervorgang gänzlich zu verzichten, stellt eine enorme Energieeinsparung bei der Herstellung dar und erlaubt deutlich höhere Standzeiten der Werkzeuge, was zu einem weiteren entscheidenden Kostenvorteil bei der erfindungsgemäßen Bipolarplatte führt.

Weitere Vorteile liegen darin, dass die Polyurethanharzsysteme aufgrund ihrer hohen Festigkeit und Flexibilität eine faltbare Bipolarplatte ermöglichen, was im Gesamtaufbau des Brennstoffzellenstapels Dichtstellen einsparen kann, was ebenfalls ein entscheidender Vorteil ist.

Das Polyurethanharz ist aus zwei flüssigen Ausgangskomponenten hergestellt, von welchen eine ein Isocyanat oder ein Polyisocyanat umfasst und/oder von welchen Ausgangskomponenten eine ein Polyol umfasst. Die Verwendung von Isocyanat oder Polyisocyanat und Polyol hat sich als besonders effizient erwiesen. Die flüssigen Ausgangskomponenten lassen sich entsprechend mischen und zu dem Harzsystem aushärten.

Beide flüssigen Ausgangskomponenten sind mit Graphit und/ oder Ruß als Füllstoff versehen. Dies hat den Vorteil, dass in den flüssigen unvermischten Ausgangskomponenten eine relativ geringe Viskosität vorliegt, sodass das Graphit als Füllstoff, wobei es sich gemäß einer vorteilhaften Ausgestaltung um technisch sehr reinen, bevorzugt synthetischen Graphit und/oder Ruß handelt, relativ homogen und gleichmäßig mit der entsprechenden Ausgangskomponente vermischt werden kann. Werden die beiden bereits mit diesem Füllstoff vermischten Ausgangskomponenten dann ihrerseits vermischt, lässt sich so eine außerordentlich effiziente und gleichmäßige Verteilung des Füllstoffs erreichen.

Prinzipiell sind auch andere Füllstoffe in einem oder beiden der Ausgangskomponenten denkbar, beispielsweise Fasern oder ähnliche Füllstoffe, welche die mechanische Festigkeit noch weiter erhöhen. Besonders bevorzugt wird jedoch ausschließlich Graphit und/oder Ruß als Füllstoff eingesetzt, da dann eine außerordentlich homogene Verteilung des Graphits mit einer sehr homogenen Leitfähigkeit der Bipolarplatte erzielt werden kann. Vorzugsweise sind dabei mehr als 60 bis 70 Vol-%, besonders bevorzugt ca. 80 Vol.-% der vermischten Ausgangskomponenten Füllstoffe, insbesondere Graphit.

Das erfindungsgemäße Herstellungsverfahren sieht es vor, dass die Bipolarplatte für eine Brennstoffzelle aus einem Kunstharz mit wenigsten einem Füllstoff hergestellt wird, wobei zwei Ausgangskomponenten zu dem Kunstharz ausgehärtet werden. Erfindungsgemäß werden als Ausgangskomponenten solche eingesetzt, welche ein Polyurethanharz ausbilden, wobei diese in flüssigem Zustand gemischt und danach zumindest teilweise bzw. zeitweise während der Produktion in einem die Struktur der Bipolarplatte erzeugenden Werkzeug unter der Einwirkung von Temperatur gehärtet werden. Ein solches Werkzeug kann die Struktur, beispielsweise die sogenannten Header und das Flowfield, also die Strömungskanäle zur Verteilung der Medien und zur Führung der Medien von einer Platte zur nächsten, in dem Material ausbilden, sodass die Bipolarplatte quasi werkzeugfallend hergestellt werden kann. Dies ist besonders einfach und effizient. Als Temperaturen reichen dabei zum Starten eines homogenen Aushärteprozesses Temperaturen in der Größenordnung von 50 bis 60° C, sodass auch dies bei dem Verfahren gemäß einer vorteilhaften Weiterbildung entsprechend vorgesehen sein kann.

Die Ausgangskomponenten sind dabei Polyol und Isocyanat, welche beide vor dem Vermischen mit Graphit als Füllstoff versehen werden. Die Ausgangskomponenten sind also mit dem Graphit als Füllstoff entsprechend vorgefüllt, was eine sehr gleichmäßige und homogene Verteilung in jeder der Ausgangskomponenten ermöglicht. Danach werden diese Ausgangskomponenten entsprechend gemischt, sodass weiterhin eine sehr homogene Mischung und insbesondere eine sehr homogene Verteilung des Graphits als Füllstoff, welcher die elektrische Leitfähigkeit des Aufbaus der Bipolarplatte sicherstellt, vorliegt. Im Anschluss werden die so vermischten Ausgangskomponenten mit ihrem jeweiligen Füllstoff, hier also dem Graphit, ausgehärtet. Sie stehen dabei zumindest zeitweise mit einer formgebenden Oberfläche des Werkzeugs in Verbindung.

Gemäß einer vorteilhaften Weiterbildung der Idee können die Ausgangskomponenten dabei zumindest zeitweise unter Druck in das Werkzeug gedrückt oder in diesem gehalten werden. Verschiedene Werkzeuge, welche die Struktur der Bipolarplatte enthalten und auf das aushärtende Polyurethanharzsystem übertragen, sind denkbar. Beispielsweise können dies offene Gießformen sein, geschlossene Spritzgussformen oder ähnliches. Typischerweise sind diese auf die zum Aushärten des Gemischs sinnvolle Temperatur von ca. 50 bis 60° C beheizt und werden gemäß dieser vorteilhaften Weiterbildung unter Druck mit dem Gemisch der Ausgangskomponenten gefüllt, welches dann ganz oder zumindest zeitweise unter Druck und/oder in dem Werkzeug aushärtet, sodass die Bipolarplatte bevorzugt werkzeugfallend hergestellt werden kann.

Ein weiterer entscheidender Vorteil bei dem Herstellungsverfahren besteht nun darin, dass die Füllstoffe, hier also insbesondere oder vorzugsweise ausschließlich, der Graphit und/oder Ruß mit den flüssigen Ausgangskomponenten vermischt werden. Dies reduziert den Verschmutzungsgrad bei der Herstellung, da diese Vermischung relativ einfach und effizient, insbesondere bei der Herstellung der Ausgangskomponenten, direkt erfolgen kann. In der eigentlichen Fertigung werden dann nur diese flüssigen mit dem Füllstoff versehenen Ausgangskomponenten gemischt, was typischerweise ohne eine Beeinträchtigung der Herstellungslinie mit Graphitstaub möglich ist, was ein weiterer entscheidender Vorteil des erfindungsgemäßen Herstellungsverfahrens ist und durch die Verringerung der Verschmutzung auch mit einem Kostenvorteil einhergeht.

Weitere vorteilhafte Ausgestaltungen der erfindungsgemäßen Bipolarplatte und des Verfahrens zu ihrer Herstellung ergeben sich auch aus den Ausführungsbeispielen, welche nachfolgend anhand der Figuren näher erläutert sind.

Dabei zeigen:
- Fig. 1: eine schematische Ansicht einer Bipolarplatte in einer dem Stand der Technik vergleichbaren beispielhaften geometrischen Ausgestaltung; und
- Fig. 2: eine schematische Darstellung des erfindungsgemäßen Verfahrens.

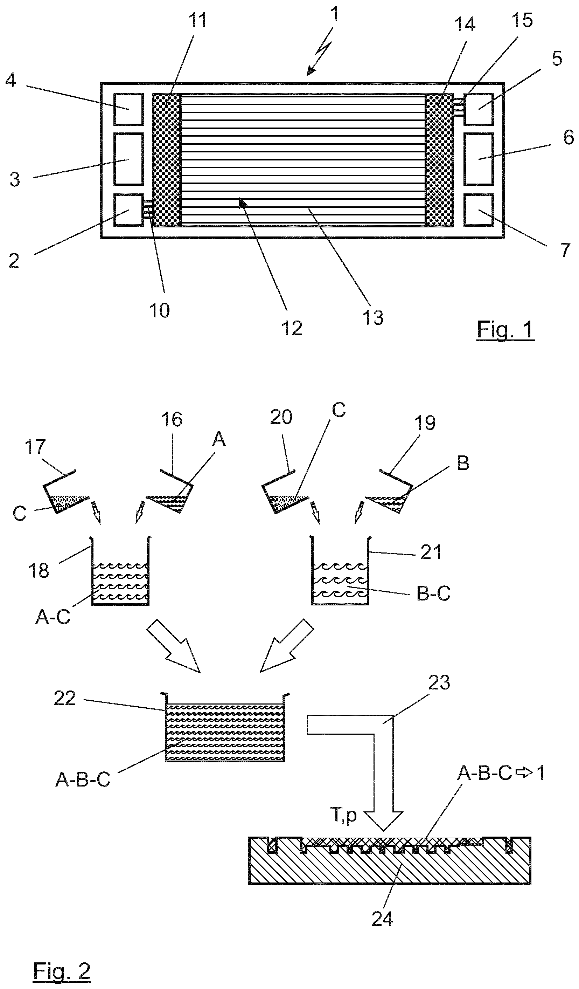

In der Figur 1 ist die Draufsicht auf eine mit 1 bezeichnete Bipolarplatte, beispielsweise die Anodenseite einer Bipolarplatte 1, gezeigt. Die Bipolarplatte 1 weist an ihren beiden Seiten, den sogenannten Headern, mehrere Durchbrüche 2 bis 7 auf, welche zur Zufuhr und Abfuhr von Medien dienen. In dem hier dargestellten Ausführungsbeispiel ist die Draufsicht auf die Oberfläche der Bipolarplatte 1, welche der Anodenseite einer benachbarten Einzelzelle eines in seiner Gesamtheit nicht dargestellten Brennstoffzellenstapels zugewandt ist, dargestellt. Sie hat beispielsweise rechts oben den mit 2 bezeichneten Durchbruch, welcher zusammen mit vergleichbaren Durchbrüchen benachbarter Bipolarplatten 1 einen Zufuhrkanal für Wasserstoff ausbildet. Der Wasserstoff strömt dann durch diesen einen Teil des Zufuhrkanals ausbildenden Durchbruch 2 zu jeder der Bipolarplatten 1 und über mit 10 bezeichnete Verbindungskanäle in einen Sammel- bzw. Verteilbereich 11 eines in seiner Gesamtheit mit 12 bezeichneten Strömungsfeldes. Der Verteilbereich 11 hat eine offene Struktur, z.B. mit den hier angedeuteten Noppen, um eine Querverteilung des Wasserstoffs zu ermöglichen. In dem in Strömungsrichtung weitergehenden Verlauf des Strömungsfeldes 12 befindet sich eine Kanalstruktur 13. Über diese Kanalstruktur 13 mit zueinander geschlossenen parallelen Kanälen werden die Gase auf die Anodenseite der Einzelzelle verteilt. Der Sammel- bzw. Verteilbereich 11 hilft dabei, dass alle Kanäle der Kanalstruktur 13 möglichst gleichmäßig durchströmt werden. Nach dem Durchströmen der Kanäle der Kanalstruktur 13 gelangt das Restgas vermischt mit in der Brennstoffzelle entstandenem Produktwasser in einen hier mit 14 bezeichneten dem Verteilbereich 11 vergleichbaren Sammelbereich, in welchem sich das Gas-/Flüssigkeitsgemisch entsprechend sammelt. Es strömt dann über Verbindungskanäle 15 der Abströmseite in den mit 5 bezeichneten Durchbruch, welcher zusammen mit weiteren analogen Durchbrüchen der benachbarten Bipolarplatten 1 einen Abfuhrkanal 16 ausbildet.

Die auf der gegenüberliegenden Seite der bzw. Bipolarplatte 1 liegende Struktur für die Kathodenseite der benachbarten Einzelzelle sieht im Wesentlichen genauso aus. Die Luft bzw. der Sauerstoff wird beispielsweise über den Durchbruch 4 zugeführt und über den Durchbruch 7 entsprechend abgeführt. Die bei den meisten Aufbauten im Querschnitt etwas grösseren Durchbrüche 3 und 6 sind zur Zufuhr und Abfuhr von flüssigem Kühlmedium, beispielsweise Kühlwasser, vorgesehen. Häufig ist es so, dass die Bipolarplatten 1 aus zwei Teilplatten ausgebildet sind, welche mit ihren Rückseiten miteinander verbunden sind. Sie bilden dann zwischen ihren Rückseiten weitere Kanäle aus, welche über die Durchbrüche 3 und 6 mit Kühlflüssigkeit durchströmt werden können. All dies ist dem Fachmann soweit bekannt, sodass hierauf nicht weiter eingegangen werden muss.

Die Besonderheit der Bipolarplatte 1 liegt nun in ihrem Material. Sie besteht aus einem Polyurethanharz (PUR), welches in der später noch näher beschriebenen Art und Weise mit einem elektrisch leitenden Füllstoff in Form von Graphit und/oder Ruß hergestellt ist. Ein solches Polyurethanharzsystem für die Bipolarplatte 1 macht diese außerordentlich flexibel und gibt ihr eine hohe Festigkeit bei guter Funktionalität. Das Herstellungsverfahren ermöglicht dabei weitere energetische und prozesstechnische Vorteile gegenüber den kunstharzgebundenen Systemen gemäß dem Stand der Technik.

In der Darstellung der Figur 2 ist das Herstellungsverfahren schematisch angedeutet. Eine erste Ausgangskomponente A, welche hier in einem Behälter 16 exemplarisch angedeutet ist, wird mit Graphit C in einem mit 17 bezeichneten angedeuteten Behälter versehen. Die beiden Stoffe werden in dem Behälter 18 entsprechend vermischt, sodass ein Gemisch A-C vorliegt. Die Ausgangskomponente A kann dabei vorzugsweise Polyol sein, bei dem Füllstoff in Form des Graphits C handelt es sich um synthetischen Graphit mit entsprechend kleiner Partikelgröße in der Größenordnung von wenigen Mikrometern. In der flüssigen Ausgangskomponente A lässt sich das Graphit C dabei sehr homogen und gleichmäßig verteilen.

Auf der rechten Seite der Figur 2 ist ein ähnlicher Ablauf dargestellt. Eine mit B bezeichnete Ausgangskomponente in einem Behälter 19 wird ebenfalls mit Graphit C aus einem Behälter 20 vermischt, sodass in dem Behälter 21 eine Mischung B-C aus der zweiten Ausgangskomponente B und dem Graphit C vorliegt. Für das Graphit gelten hier dieselben Merkmale und Parameter, wie sie zuvor im linken Teil der Figur beim Vermischen des Graphits C mit der ersten Ausgangskomponente A beschrieben worden sind. Die zweite Ausgangskomponente B, welche ebenfalls in flüssiger Form vorliegt und mit dem Graphit C vermischt wird, ist Isocyanat. Die jeweils mit dem Graphit C verengten und immer noch flüssigen Ausgangskomponenten A-C und B-C werden dann miteinander vermischt, sodass in dem mit 22 bezeichneten Behälter ein Komponentengemisch A-B-C vorliegt, wobei aufgrund der Tatsache, dass das Graphit C mit den einzelnen flüssigen Ausgangskomponenten A, B bereits vorvermischt worden ist, eine außerordentlich homogene Mischung erzielt werden kann.

Der Anteil von Graphit in dieser Mischung liegt bei ca. 80 Vol.-%. Die gleichmäßige und homogene Verteilung stellt dabei sicher, dass später eine gleichmäßige und homogene elektrische Leitfähigkeit der Bipolarplatte 1, welche aus dem Gemisch A-B-C hergestellt werden soll, gewährleistet ist.

Wie durch den Pfeil 23 angedeutet, gelangt dieses Gemisch A-B-C dann in ein Werkzeug 24, welches eine Struktur enthält, die als Negativ der in der Bipolarplatte 1 gewünschten Struktur ausgebildet ist. Bei einer Temperatur T von ca. 50 bis 60° C und gegebenenfalls einem gegenüber dem Atmosphärendruck erhöhten Druck P härtet das Gemisch A-B-C in dem Werkzeug 24 dann zu der Bipolarplatte 1 aus, wobei nicht zwingend der gesamte Aushärtungsprozess in dem Werkzeug 24 stattfinden muss, sondern gegebenenfalls auch nur ein Teil desselben dort erfolgen kann. Der Aufbau ist dann außerordentlich stabil, hat eine geringe Porosität und eine relativ hohe Flexibilität, sodass die Bipolarplatte 1 quasi werkzeugfallend und ohne weitere Verfahrensschritte wie ein Tempern oder dergleichen werden kann. Wie oben bereits erwähnt sind dabei verschiedene Arten von Werkzeugen 24 möglich, sodass für den Fachmann klar ist, dass das in Figur 2 angedeutete Werkzeug 24, welches hier beispielhaft als offene Gießform dargestellt ist, lediglich ein mögliches Ausführungsbeispiel darstellt.

## Patentansprüche

1. Bipolarplatte (1) für eine Brennstoffzelle aus einem Kunstharz (A-B) mit Füllstoffen, die zumindest Graphit (C) und/oder Ruß umfassen, wobei als Kunstharz (A-B) ein Polyurethanharz (PUR) zum Einsatz kommt,
das Polyurethanharz (A-B) aus zwei flüssigen Ausgangskomponenten (A, B) hergestellt ist, von welchen eine Isocyanat (B) oder Polyisocyanat umfasst und/oder von welchen eine Polyol (A) umfasst, und
beide Ausgangskomponenten (A, B) mit Graphit (C) und/oder Ruß als Füllstoff versehen sind.

2. Bipolarplatte (1) nach Anspruch 1,
**dadurch gekennzeichnet, dass**
die Füllstoffe mehr als 60 bis 70 Vol.-%, bevorzugt ca. 80 Vol.-%, des fertigen Bauteils ausmachen.

3. Bipolarplatte (1) nach Anspruch 1 oder 2,
**dadurch gekennzeichnet, dass**
reiner, vorzugsweise synthetischer, Graphit (C) und/oder Ruß als einziger Füllstoff eingesetzt ist.

4. Verfahren zur Herstellung einer Bipolarplatte (1) für eine Brennstoffzelle aus einem Kunstharz (A-B) mit einem Füllstoff, wobei wenigstens zwei Ausgangskomponenten (A, B) zu dem Kunstharz (A-B) ausgehärtet werden, wobei als Ausgangskomponenten (A, B) solche eingesetzt werden, welche ein Polyurethanharz ausbilden, wobei diese in flüssiger Form gemischt und danach zumindest zeitweise in einem die Struktur der Bipolarplatte (1) erzeugenden Werkzeug (23) unter Einwirkung von Temperatur (T) ausgehärtet werden, und
als Ausgangskomponenten (A, B) Polyol (A) und Isocyanat (B) eingesetzt werden, welche beide vor dem Vermischen mit Graphit (C) und/oder Ruß als Füllstoff versehen werden.

5. Verfahren nach Anspruch 4,
**dadurch gekennzeichnet, dass**
zumindest zum Starten der Aushärtung eine Temperatur (T) von ca. 50 bis 60° C vorgegeben wird.

6. Verfahren nach Anspruch 4 oder 5,
**dadurch gekennzeichnet, dass**
die Ausgangskomponenten (A, B) mit dem Füllstoff zumindest zeitweise unter Druck (p) in das Werkzeug (24) gedrückt und/oder in diesem gehalten werden.

## Claims

1. A bipolar plate (1) for a fuel cell made of a synthetic resin (A-B) with fillers which comprise at least graphite (C) and/or carbon black, wherein a polyurethane resin (PUR) is used as the synthetic resin (A-B),
the polyurethane resin (A-B) is produced from two liquid starting components (A, B), of which one comprises an isocyanate (B) or polyisocyanate and/or of which one comprises a polyol (A), and
both starting components (A, B) are provided with graphite (C) and/or carbon black as filler.

2. The bipolar plate (1) according to claim 1,
**characterized in that**
the fillers make up more than 60 to 70% by volume, preferably approximately 80% by volume, of the finished component.

3. The bipolar plate (1) according to claim 1 or 2,
**characterized in that**
pure, preferably synthetic, graphite (C) and/or carbon black is used as the sole filler.

4. A method for producing a bipolar plate (1) for a fuel cell made of a synthetic resin (A-B) with a filler, wherein at least two starting components (A, B) are cured to form the synthetic resin (A-B), wherein those are used as starting components (A, B) which form a polyurethane resin, wherein these are mixed in liquid form and then cured at least temporarily in a tool (23) producing the structure of the bipolar plate (1) under the action of temperature (T), and
polyol (A) and isocyanate (B) are used as starting components (A, B), which are both provided with graphite (C) and/or carbon black as filler before mixing.

5. The method according to claim 4,
**characterized in that**
a temperature (T) of approximately 50 to 60°C is predetermined at least for starting the curing.

6. The method according to claim 4 or 5,
**characterized in that**
the starting components (A, B) with the filler are pressed at least temporarily under pressure (p) into the tool (24) and/or are held therein.

## Revendications

1. Plaque bipolaire (1) pour une pile à combustible constituée d'une résine synthétique (A-B) avec des charges qui comprennent au moins du graphite (C) et/ou du noir de carbone, une résine de polyuréthane (PUR) étant utilisée en tant que résine synthétique (A-B),
la résine de polyuréthane (A-B) étant fabriquée à partir de deux composants de départ liquides (A, B), dont un comprend un isocyanate (B) ou un polyisocyanate et/ou dont un comprend un polyol (A), et
les deux composants de départ (A, B) étant pourvus de graphite (C) et/ou de noir de carbone en tant que charge.

2. Plaque bipolaire (1) selon la revendication 1,
**caractérisée en ce que**
les charges représentent plus de 60 à 70 % en volume, de préférence environ 80 % en volume, du composant fini.

3. Plaque bipolaire (1) selon la revendication 1 ou 2,
**caractérisée en ce que**
du graphite (C) pur, de préférence synthétique, et/ou du noir de carbone est utilisé en tant que charge unique.

4. Procédé de fabrication d'une plaque bipolaire (1) pour une pile à combustible constituée d'une résine synthétique (A-B) avec une charge, au moins deux composants de départ (A, B) étant durcis en la résine synthétique (A-B), des composants de départ (A, B) étant utilisés, lesquels forment une résine de polyuréthane, ceux-ci étant mélangés sous forme liquide et ensuite durcis au moins temporairement dans un outil (23) produisant la structure de la plaque bipolaire (1) sous l'effet de la température (T), et
des polyols (A) et des isocyanates (B) étant utilisés en tant que composants de départ (A, B), lesquels sont tous deux pourvus de graphite (C) et/ou de noir de carbone en tant que charge avant le mélange.

5. Procédé selon la revendication 4,
**caractérisé en ce que**
au moins pour démarrer le durcissement, une température (T) d'environ 50 à 60 °C est prédéfinie.

6. Procédé selon la revendication 4 ou 5,
**caractérisé en ce que**
les composants de départ (A, B) sont pressés avec la charge au moins temporairement sous pression (p) dans l'outil (24) et/ou maintenus dans celui-ci.
